# EUROPÄISCHE PATENTSCHRIFT

(11) **EP 1 200 722 B1**
(45) Veröffentlichungstag und Bekanntmachung des Hinweises auf die Patenterteilung: **13.10.2004**
(21) Anmeldenummer: 00953111.2
(22) Anmeldetag: 27.07.2000
(51) Int. Cl.: F02D 9/10, F16K 1/226

(54) **DROSSELEINRICHTUNG MIT EINER KLAPPE ZUM EINBAU IN EINE FLANSCHVERBINDUNG**
THROTTLE DEVICE, COMPRISING A BUTTERFLY VALVE FOR FITTING INTO A FLANGE JOINT
DISPOSITIF D'ETRANGLEMENT A VOLET DESTINE AU MONTAGE DANS UNE JONCTION A BRIDES

(30) Priorität: 03.08.1999 DE 19936457
(43) Veröffentlichungstag der Anmeldung: 02.05.2002
(73) Patentinhaber: Mann + Hummel GmbH, 71638 Ludwigsburg (DE)
(72) Erfinder: JESSBERGER, Thomas, 71277 Rutesheim (DE); NEUSCHWANDER, Helmut, 71636 Ludwigsburg (DE)
(74) Vertreter: Voth, Gerhard
(86) Internationale Anmeldenummer: PCT/EP2000/007305
(87) Internationale Veröffentlichungsnummer: WO 2001/009499

(56) Entgegenhaltungen:
- EP-A- 0 424 197
- CH-A- 653 424
- DE-A- 2 427 995
- DE-A- 19 615 438
- DE-U- 9 402 114

## Beschreibung

### Stand der Technik

Die Erfindung betrifft eine Drosseleinrichtung mit einer Klappe, insbesondere zum Einbau in die Flanschverbindung eines Ansaugtraktes einer Brennkraftmaschine, nach der Gattung des Patentanspruches 1 (siehe DE-A-2427995).

Aus der DE 32 24 946 A1 ist zum Beispiel ein Saugrohr für eine Brennkraftmaschine bekannt, in dem Schaltklappen eingebaut sind, welche zur Schaltung verschiedener Saugkanallängen für die Ansaugluft geeignet sind. Eine solche Anordnung soll bewirken, daß die Saugkanallängen optimal an den Betriebszustand der Brennkraftmaschine angepaßt werden können, so daß dynamische Druckschwankungen in der Ansaugluft zur Verbesserung der Luftladung in den Zylindern genutzt werden können. Um den Einbau der Schaltklappen zu erleichtern, werden diese möglichst in Bereichen von Flanschen oder Gehäuseteilungen des Saugrohrs angebracht. Diese Verbindungsstellen werden derart abgedichtet, daß der Innenraum des Saugrohrs von dessen Umgebung getrennt ist.

Um die beschriebenen Effekte für die Aufladung der Brennkraftmaschine mit Verbrennungsluft optimal nutzen zu können, ist es notwendig, daß die Schaltklappen möglichst dicht schließen. Um dies zu erreichen müssen die Schaltklappen eng toleriert werden, was den Aufwand für deren Fertigung erhöht, wodurch auch die Kosten steigen. Neben der Dichtheit müssen die Bauteile weiterhin vor einem Schlagen oder Klappern geschützt werden, da ansonsten die pulsierende Beanspruchung der Verbrennungsluft zu einem erhöhten Verschleiß der Schaltklappen führen würde. Hierdurch entstehen nicht nur erhöhte Anforderungen an die Bauteiltoleranzen, sondern auch an die Lagerung der Schaltklappen, wodurch die Kosten weiter in die Höhe getrieben werden.

Die Toleranzanforderungen steigen um so mehr, wenn mehrere Schaltklappen auf einer Welle zusammengefaßt werden, damit sie durch einen Aktuator betätigt werden können. Bei derartigen Bauformen kann zwar die Elastizität der Bauteile als Toleranzausgleich genutzt werden, jedoch ist dabei zu beachten, daß die Schaltkräfte für den Klappenverband nicht zu hoch werden dürfen, da sonst der Aufwand für den Antrieb zu hoch wird.

Es ist daher Aufgabe der Erfindung, eine Drosseleinrichtung zu schaffen, die kostengünstig in der Herstellung ist, bei Verschluß der Schaltklappe eine gute Abdichtung gewährleistet und einer Bauteilanregung durch die pulsierende Ansaugluft entgegenwirkt. Diese Aufgabe wird durch die Merkmale des Patentanspruches 1 gelöst.

### Vorteile der Erfindung

Die Erfindungsgemäße Drosseleinrichtung ist in die Flanschverbindung einer Kanalstruktur eingesetzt und zeichnet sich dadurch aus, daß die Dichtung, die wegen der notwendigen Abdichtung der Flanschverbindung vorgesehen werden muß, gleichzeitig einen Dichtsteg aufweist, der in die Kanalstruktur hineinreicht. Dieser Dichtsteg weist eine Anlagefläche auf, die der geschlossenen Klappe als Anschlag dient.

Auf diese Weise kommt eine Abdichtung zwischen der Wandung der Kanalstruktur und der Klappe zustande. Durch die Elastizität des Dichtungswerkstoffes wirkt diese Anlagefläche gleichzeitig als Toleranzausgleich. Außerdem kann der Spalt, der sich aufgrund eines kleineren Durchmessers der Klappe im Verhältnis zum Querschnitt der Kanalstruktur ergibt, überbrückt werden. Durch die Gestaltung der Dichtung mit einem Dichtsteg entsteht kein zusätzlicher Fertigungsaufwand. Der Dichtsteg bzw. die entsprechende Gestaltung der Flanschverbindung muß lediglich konstruktiv bei der Auslegung der Drosseleinrichtung beachtet werden. Gleichzeitig sinken die Anforderungen an die Bauteiltoleranzen, so daß die Baugruppe mit einer höheren Wirtschaftlichkeit gefertigt werden kann. Das Anliegen der Schaltklappe an der Anlagefläche verhindert außerdem ein Klappern oder Schlagen der Klappe im geschlossenen Zustand. Dabei können gleichzeitig die dämpfenden Eigenschaften des Dichtungswerkstoffes genutzt werden, um sich aufbauende Schwingungen von vorne herein zu unterbinden.

Die Drosseleinrichtung muß nicht zur stufenlosen Drosselung des in der Kanalstruktur befindlichen Fluidstroms genutzt werden. Die Vorteile der Erfindung ergeben sich genauso für eine zweistufige Ausführung, wobei die Drosselklappe nur geöffnet oder geschlossen werden kann.

Gemäß einer besonderen Ausbildung des Erfindungsgedankens wird die Anlagefläche außerhalb des Strömungsquerschnittes der Kanalstruktur angeordnet. Hierzu wird ein Totraum vorgesehen, in den die Kante der Drosselklappe in der Schließstellung hineinreicht. Die Drosselklappe ist in dieser Variante also auch größer als der Strömungsquerschnitt. Hiermit läßt sich der Vorteil erreichen, daß die Strömung durch den in die Kanalstruktur hineinreichenden Dichtsteg weniger gestört wird. Die Folge ist ein geringerer Strömungswiderstand der geöffneten Drosseleinrichtung und eine geringere Schwingungsanregung.

Es ist Vorteilhaft, auch auf der, der Anlagefläche des Dichtsteges abgekehrten Seite eine dem Totraum entsprechende Struktur zu schaffen. Diese dient als Verformungsraum, in den der Dichtsteg durch die anliegende Drosselklappe hineingedrückt werden kann. Hierdurch läßt sich die resultierende Elastizität des Dichtsteges vergrößern, so daß größere Toleranzen an den Bauteilen ausgeglichen werden können. Durch die Verformung des Dichtsteges entstehen außerdem geringere Verformungskräfte, wodurch auch die notwendige Schaltkraft des Aktuators in Grenzen gehalten werden kann. Dies ist insbesondere dann wichtig, wenn die Drosselklappe durch eine Unterdruckdose angesteuert wird, die durch den im Saugrohr einer Brennkraftmaschine anliegende Druckunterschiede betätigt wird. Durch deren geringen Betrag sind die durch die Unterdruckdose erzeugten Schaltkräfte begrenzt. Andererseits stellt die Antriebsvariante mit Unterdruckdose eine sehr kostengünstige Alternative dar, so daß ein großes Interesse zur Verringerung der Schaltkräfte besteht.

Eine besondere Ausführungsform der Erfindung sieht vor, für die Drosseleinrichtung montagegespritzte Klappenmodule zu verwenden. Diese lassen sich als Standardbauteil besonders kostengünstig herstellen. Die Drosselklappe wird dabei direkt in den zugehörigen Rahmen gespritzt, wodurch gleichzeitig die drehbare Lagerung geschaffen wird. Derartige Klappenmodule lassen sich zurn Beispiel in die Verbindung zwischen ein Saugrohr und dem Zylinderkopf einer Brennkraftmaschine einsetzen. Die hier notwendige Dichtung kann in der beschriebenen Weise gleichzeitig zur Abdichtung der Drosselklappe dienen. Das montagegespritzte Drosselklappenmodul muß in seiner Geometrie dieser Flanschverbindung angepaßt werden, so daß die Kanten der Klappe mit den vorgesehenen Anlageflächen korrespondieren können.

Eine weitere Möglichkeit der Anbindung eines Klappenmoduls in einer Flanschverbindung besteht darin, daß Modul vollständig zwischen die Flanschverbindung zu schalten. Hierdurch entstehen zwei abzudichtende Spalte jeweils zwischen den Stirnseiten des Klappenmoduls und den beiden Flanschen der Kanalstruktur. Dem entsprechend sind auch zwei Dichtungen notwendig, wobei die beiden Dichtungen jeweils nur einem der beiden Klappenflügel der Klappe als Anlagefläche dienen. Auf diese Weise läßt sich ein montagegespritztes Klappenmodul herstellen, in daß vorteilhafterweise gleich die Dichtungen integriert werden können. Diese können eingesetzt werden oder als weitere Komponente in das Klappenmodul montagegespritzt werden. Dadurch läßt sich eine Standardisierung der erfindungsgemäßen Drosseleinrichtung erreichen, wobei die entstehenden Klappenmodule an beliebigen Einbauorten zur Anwendung kommen können.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben. Hierbei zeigen
- Figur 1: den Mittelschnitt durch eine Flanschverbindung einer Kanalstruktur, in die eine Drosselklappe eingebracht ist,
- Figur 2: eine Variante der Flanschverbindung gemäß Figur 1 als Detail X bei der am Dichtsteg ein Verformungsraum angeordnet ist,
- Figur 3: eine Flanschverbindung im Mittelschnitt, in die ein Klappenmodul eingebracht ist und
- Figur 4: eine Flanschverbindung mit eingebrachtem Klappenmodul, wobei dieses einen Teil der Flanschverbindung bildet.

### Beschreibung der Ausführungsbeispiele

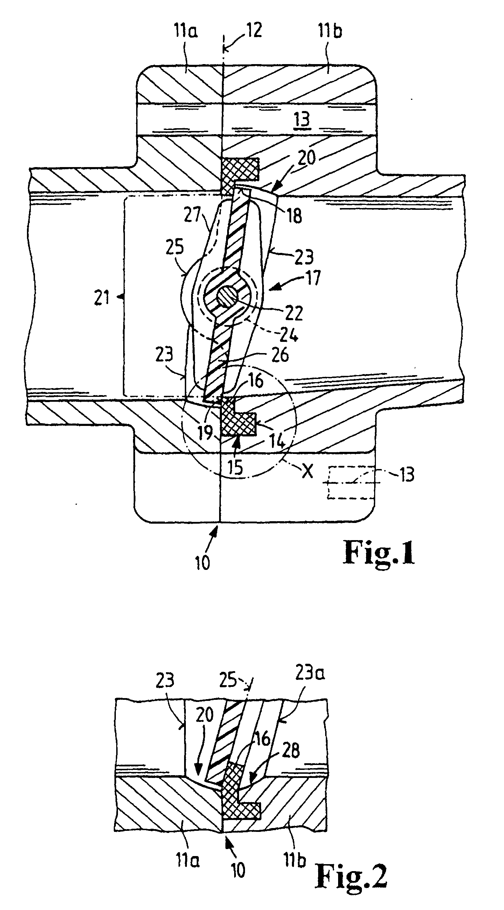

In Figur 1 ist der Ausschnitt einer luftführenden Kanalstruktur dargestellt. Diese weist eine Flanschverbindung 10 mit zwei Flanschen 11a, 11b auf. Die Flansche kommen an einer Verbindungsebene 12 zur Anlage und können durch Befestigungsbohrungen 13 mit Hilfe von nicht dargestellten Schrauben fixiert werden. Im Flansch 11b ist eine Nut 14 für eine Dichtung 15 vorgesehen. Im unmontierten Zustand des Flansches reicht die Dichtung aus der Verbindungsebene 12 heraus. Durch Montage des Flansches 11a wird die Dichtung verformt, wodurch die Dichtwirkung zustande kommt.

Von der Dichtung 15 reicht ein Dichtsteg 16 in die Kanalstruktur hinein. Diese ist derart angeordnet, daß eine Klappe 17 mit ihren Kanten 18 bei vollständigern Verschluß der Klappe auf Anlageflächen 19 zu liegen kommt. Dichtung und Dichtsteg sind einteilig ausgeführt und zum Beispiel aus Gummi mit der Shorehärte 60 hergestellt. Durch die Auflage der Kanten 18 am Dichtsteg 16 kommt daher eine Abdichtung zustande. In diesem Zustand reichen die Kanten 18 in eine Totraum 20 hinein, der außerhalb eines Strömungsquerschnitts 21 der Kanalstruktur liegt. Dadurch wird erreicht, daß der Dichtsteg 16 ebenfalls außerhalb des Strömungsquerschnitts 21 liegt, wodurch geringe Strömungsverluste erzielt werden. Zu einer Klappenwelle 22 hin weisen die Toträume 20 Ausläufe 23 auf, da in diesem Bereich ein Totraum aufgrund der Klappengeometrie nicht vorgesehen ist. Die Klappenwelle 22 ist nämlich in eine Aufnahme 24 im Flansch 11b gelagert, wobei in diesem Bereich eine Zusatztrennfuge 25 zwischen den Flanschen 11a, 11b außerhalb der Verbindungsebene 12 liegt. Daher entfällt in diesem Bereich eine zusätzliche Abdichtung durch den Dichtsteg 16. In den benachbarten Bereichen ist die Trennfuge der Schrägstellung der Klappe angepaßt, um die Anlagefläche 19 für die Kante 18 zu schaffen (gestrichelt dargestellt).

Die Klappe selbst besteht aus zwei Klappenflügeln 26, die auf der Klappenwelle 22 gelagert sind. Diese Klappenflügel sind zusätzlich durch Rippen 27 versteift.

Die Aufnahme 24 muß elastisch genug sein, damit die Klappe 17 in den Flansch 11b eingebaut werden kann.

In Figur 2 ist eine alternative Ausgestaltung der Flanschverbindung 10 gemäß Figur 1 dargestellt. Die Flansche 11a, 11b weisen jedoch zusätzlich zum Totraum 20 einen Verformungsraum 28 auf. Wie aus der Schnittebene deutlich wird, führt der Verformungsraum zu einer höheren Elastizität des Dichtsteges 16, da dieser im Flansch 11b keine Abstützung erfährt. Der Auslauf 23a des Verformungsraumes 28 ist genauso wie die Trennfuge 25 der Schrägstellung der Klappe 17 angepaßt, so daß durch den Dichtsteg 16 eine möglichst weitgehende Abdichtung der Klappe möglich wird.

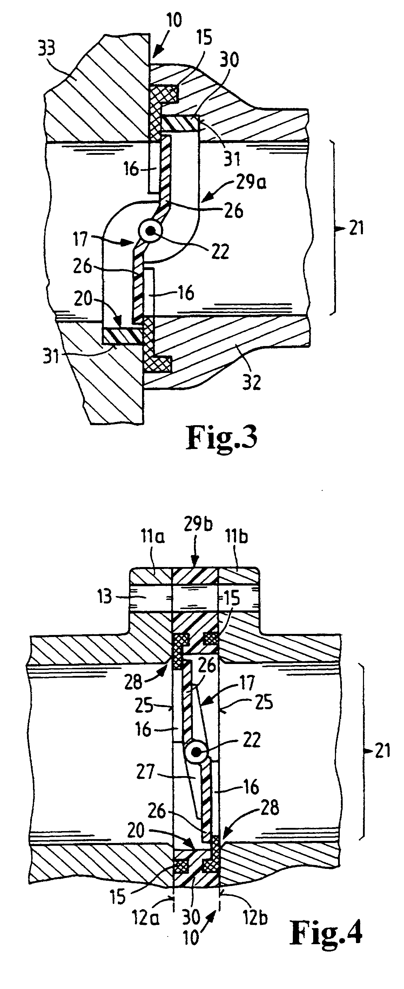

Die Flanschverbindungen 10 gemäß der Figuren 3 und 4 stellen Varianten dar, bei denen montagegespritzte Klappenmodule 29a, 29b zur Anwendung kommen. Diese stellen eine Baueinheit mit der Klappe 17 dar, die entsprechend der Bauform gemäß Figur 1 und 2 aufgebaut ist. Die Toträume 20 bzw. die Verformungsräume 28 können durch die Klappenmodule 29a, 29b teilweise mitgebildet werden, in dem diese einen größeren Querschnitt aufweisen als der Strömungsquerschnitt 21.

Die Klappenmodule 29a, 29b weisen Klappenrahmen 30 auf, mit dessen Hilfe ie in die Flanschverbindung 10 eingesetzt werden können. Hierzu bestehen folgende Möglichkeiten.

Gemäß Figur 3 wird der Klappenrahmen in einem hierfür vorgesehenen Einbauraum 31 in der Flanschverbindung fixiert. Die Flanschverbindung kann zum Beispiel zwischen einem Saugrohr 32 und einem Zylinderkopf 33 gebildet sein. Zylinderkopf und Saugrohr werden unter Zuhilfenahme der Dichtung 15 montiert, wobei das Klappenmodul 29a derart gestaltet ist, daß es eine Anlage beider Klappenflügel 26 am Dichtsteg 16 erlaubt. Im Bereich der Klappenwelle 22 und dem zugehörigen Bereich des Klappenrahmens 30 ist der Dichtsteg 16 unterbrochen, so daß eine zuverlässige Montage des Klappenmoduls 29a im Einbauraum 31 möglich ist.

Das Klappenmodul 29b gemäß Figur 4 ist scheibenförmig aufgebaut. Zur Erzeugung der Flanschverbindung 10 wird das Klappenmodul zwischen die Flansche 11a, 11b gebracht, wodurch zwei Verbindungsebenen 12a, 12b entstehen. In dieser Bauform sind die Verbindungsebenen 12a, 12b identisch mit den jeweils entstehenden Trennfugen 25. Folglich werden zwei Dichtungen 15 notwendig, die identisch aufgebaut sein können. Die zu den Dichtungen gehörenden Dichtstege 16 sind nur am halben Umfang der Dichtung angebracht und werden so montiert, daß ihre Enden im Bereich der Klappenwelle 22 liegen. Der Dichtsteg 16 jeder Dichtung dichtet somit jeweils einen Klappenflügel 26 der Klappe ab. Entsprechend der Variante gemäß Figur 1 wird die Flanschverbindung über eine Befestigungsbohrung 13 fixiert.

## Patentansprüche

1. Drosseleinrichtung, welche eine Klappe (17) aufweist, insbesondere zum Einbau in den Ansaugtrakt einer Brennkraftmaschine, die im Bereich einer Flanschverbindung (10) einer Kanalstruktur eingesetzt ist, wobei die Flanschverbindung (10) eine elastische Dichtung (15) aufweist, wobei die Dichtung (15) einen Dichtsteg (16), aufweist, der derart in die Kanalstruktur hineinreicht, daß eine Anlagefläche (19) für die geschlossene Klappe gebildet wird, **dadurch gekennzeichnet, daß** auf der Seite des Dichtsteges (16), der der Anfagefläche (19) abgekehrt ist, ein Verformungsraum in der Kanalstruktur vorgesehen ist.

2. Drosseleinrichtung nach Anspruch 1, **dadurch gekennzeichnet, daß die** Anlagefläche (19) außerhalb eines Stömungsquerschnitts (21) in einem Totraum (20) liegt

3. Drosseleinrichtung nach einem der vorherigen Ansprüche, **dadurch gekennzeichnet, daß** die Drosseleinrichtung ein montagegespritztes Klappenmodul (29a, 29b) ist, welches in die Flanschverbindung (10) eingesetzt ist.

4. Drosseleinrichtung nach Anspruch 3, wobei das Klappenmodul (29b) durch zwei Dichtungen (15) zu den jeweils benachbarten Flanschen (11) der Flanschverbindung (10) abgedichtet ist, **dadurch gekennzeichnet, daß** beide Dichtungen Dichtstege (16) aufweisen, wobei diese jeweils einen der Klappenflügel (26) der Klappe (17) in deren Schließstellung abdichten.

5. Drosseleinrichtung nach Anspruch 3 oder 4 **dadurch gekennzeichnet, daß** Dichtungen (15) und Dichtstege (16) als dritte Komponente an das Klappenmodul angespritzt werden.

## Claims

1. Throttle device, which includes a flap valve (17), more especially for installation in the intake duct of an internal combustion engine, which valve is inserted in the region of a flange connection (10) of a conduit structure, wherein the flange connection (10) includes a resilient seal (15), wherein the seal (15) includes a sealing web (16), which extends into the conduit structure in such a manner that a contact face (19) for the closed valve is formed, **characterised in that** a deformation space is provided in the conduit structure, on the side of the sealing web (16) that is remote from the contact face (19).

2. Throttle device according to claim 1, **characterised in that** the contact face (19) lies externally of a cross-sectional flow (21) in a dead space (20).

3. Throttle device according to one of the preceding claims, **characterised in that** the throttle device is an injection moulded valve module (29a, 29b), which is inserted into the flange connection (10).

4. Throttle device according to claim 3, wherein the valve module (29b) is sealed relative to the respectively adjacent flanges (11) of the flange connection (10) by means of two seals (15), **characterised in that** the two seals include sealing webs (16), wherein each of said sealing webs (16) seal one of the valve wings (26) of the valve (17) in its closed position.

5. Throttle device according to claim 3 or 4, **characterised in that** seals (15) and sealing webs (16) are integrally injected onto the valve module as the third component.

## Revendications

1. Dispositif d'étranglement, ayant un volet (17) en particulier destiné au montage dans la ligne d'aspiration d'un moteur à combustion interne, et inséré dans la zone d'une jonction à brides (10) d'une structure de canal, la jonction à brides (10) présentant un joint d'étanchéité élastique (15), le joint d'étanchéité (15) ayant un épaulement d'étanchéité (16) qui dépasse à l'intérieur de la structure de canal pour former une surface d'appui (19) pour le volet fermé,
**caractérisé en ce que**
le côté de l'épaulement d'étanchéité (16) opposé à la surface d'appui (19), comporte un espace de déformation dans la structure de canal.

2. Dispositif d'étranglement selon la revendication 1,
**caractérisé en ce que**
la surface d'appui (19) se trouve à l'extérieur d'une section transversale d'écoulement (21) dans un espace mort (20).

3. Dispositif d'étranglement selon l'une quelconque des revendications précédentes,
**caractérisé en ce que**
le dispositif d'étranglement est un module de volet injecté pour le montage (29a, 29b), qui est mis en place dans la jonction à brides (10).

4. Dispositif d'étranglement selon la revendication 3, le module de volet (29b) étant étanche par deux joints d'étanchéité (15) par rapport aux brides (11) respectivement voisines de la jonction à brides (10),
**caractérisé en ce que**
les deux joints d'étanchéité présentent des épaulements d'étanchéité (16). étanchéifiant respectivement l'une des ailes de volet (26) du volet (17) dans sa position de fermeture.

5. Dispositif d'étranglement selon la revendication 3 ou 4,
**caractérisé en ce que**
des joints d'étanchéité (15) et des épaulements d'étanchéité (16) sont injectées en tant que troisième composant au niveau du module de volet.
